# DEMANDE DE BREVET EUROPEEN

(11) **EP 4 830 841 A1**
(43) Date de publication de la demande: **28.10.2026**
(21) Numéro de dépôt: 25171984.5
(22) Date de dépôt: 23.04.2025
(51) Int. Cl.: B05B 13/04, B05B 12/12, C09J 193/00, A01G 13/27, A01M 3/04

(54) **SYSTÈME D'APPLICATION DE COLLE SUR UNE SURFACE SENSIBLEMENT CIRCULAIRE D'UN ARBRE OU D'UN POTEAU**

(71) Demandeur: Biocidal Alternative Solutions, 4480 Engis (BE)
(72) Inventeur: MORGAN, Hans, 4900 Spa (BE)
(74) Mandataire: Calysta NV

(57) **Abrégé**

Système d'application de colle sur une surface sensiblement circulaire d'un tronc d'arbre ou d'un poteau comprenant au moins un applicateur de colle (1) comprenant un bras gauche (2) et un bras droit (3) agencés pour former un espace de réception (7) d'un tronc d'arbre ou d'un poteau, chacune des extrémité distales des bras gauche (2) et droit (3) comprenant une tête rotative d'application d'une colle (8), laquelle comprend au moins une buse de pulvérisation de colle (9), un moyen de pivot (10), au moins un élément palpeur (11), au moins un ressort de retour, et au moins une tuyauterie (12) d'amenée de la colle à ladite tête rotative d'application (8).

## Description

La présente invention se rapporte à un système d'application de colle sur une surface sensiblement circulaire d'un tronc d'arbre ou d'un poteau.

En outre, la présente invention se rapporte à une colle agencée pour être appliquée par le système d'application de colle sur une surface sensiblement circulaire d'un arbre ou d'un poteau selon l'invention.

La présente invention se rapporte également à l'utilisation du système d'application de colle sur une surface sensiblement circulaire d'un arbre ou d'un poteau selon l'invention et de la colle selon l'invention.

L'application de colle sur une surface circulaire d'un tronc d'arbre ou d'un poteau est bien connue de l'état de la technique afin de former une barrière physique qui empêche les insectes rampants, tels que les fourmis, les pucerons, les chenilles et les forficules, de grimper sur le tronc à partir du sol et d'atteindre les parties supérieures de l'arbre ou du poteau. En effet, ces insectes peuvent endommager les feuilles, les fleurs ou les fruits, situés dans ces parties supérieures, compromettant ainsi la santé et la productivité d'une culture arboricole. La présence d'une barrière physique empêche les insectes d'attaquer la culture, lui permettant ainsi de prospérer.

Cette colle permet de dissuader les différents insectes rampants à la base du tronc ou du poteau, sous la zone d'application de la colle, de grimper vers le haut, ou même de les piéger dans la colle de manière mécanique si ils essayent tout de même de grimper.

La colle est généralement appliquée sous forme de bandeau entourant une surface sensiblement circulaire du tronc ou du poteau sur une largeur d'environ une quinzaine de centimètres. Etant donné que les insectes peuvent faire preuve d'ingéniosité pour exploiter la moindre faille, il est important que le bandeau de colle appliqué recouvre entièrement la circonférence de l'élément à traiter sur cette largeur, sans trou ni manquement, afin d'éviter que les insectes ne se frayent un chemin jusqu'aux parties supérieurs, réduisant drastiquement l'efficacité de la colle en tant que barrière. L'application de la colle comme barrière doit donc être réalisée de manière minutieuse durant une session d'encollage.

L'utilisation de la colle comme barrière physique sur des troncs d'arbres ou poteaux apporte une alternative écologique et efficace pour protéger les cultures des insectes rampants, tout en favorisant la biodiversité. En effet, elle permet d'éviter l'utilisation de produits chimiques, tels que des pesticides, et donc de maintenir l'équilibre écologique du jardin.

En pratique, la colle est appliquée sur la surface de chaque tronc d'arbre ou d'un poteau au moyen d'un pinceau par un opérateur.

On comprend aisément que la session d'encollage est d'une part coûteuse en temps car le nombre de troncs/poteaux à traiter est souvent élevé, et d'autre part assez ingrate et difficile pour l'opérateur. En effet, ce dernier doit se baisser et tourner à genou autour du tronc ou du poteau afin d'appliquer minutieusement la colle sur toute la circonférence à la base de l'élément à traiter, et répéter de très nombreuses fois cette opération laborieuse. L'opérateur termine souvent la tâche avec des douleurs musculaires et de la fatigue étant donné la nature répétitive et physique de l'opération, ainsi que des risques d'irritation de la peau suite au contact répété avec la colle.

De plus, la colle ayant une certaine viscosité et les troncs d'arbres ou poteaux n'ayant pas forcément une surface lisse, l'application au moyen d'un pinceau par un opérateur ne permet pas d'assurer une qualité d'encollage constante. Par exemple, la colle ne rentrera pas forcément dans de petits sillons présents à la surface des troncs ou poteaux, dans lesquels des insectes rampants pourraient donc se faufiler, réduisant l'efficacité de la barrière physique.

On comprend également que l'opérateur, bien que voulant être le plus méticuleux possible, en fin de journée d'encollage après avoir réalisé cette opération plusieurs dizaines voire centaine de fois, avec la fatigue et les douleurs musculaires, pourrait se montrer moins regardant sur la qualité de l'application de la colle, ce qui malheureusement réduit fortement l'efficacité d'une telle barrière, nécessitant des reprises ou la réalisation de nouvelles opérations, et ce bien souvent après avoir découvert les dégâts sur l'arbre.

Par ailleurs, une application au pinceau ne permet pas un recouvrement régulier de la surface du tronc ou du poteau. En effet, durant une session d'encollage, une couche plus épaisse est généralement laissée lorsque le pinceau est directement trempé dans la colle, tandis qu'une couche plus fine résulte lorsque la quantité de colle sur le pinceau se tarit, entraînant ainsi une application irrégulière qui peut également compromettre l'efficacité la barrière physique, mais aussi générer un gaspillage de colle.

On connait des dispositifs de pulvérisation de liquides, tels que de la peinture, sur des troncs d'arbres ou des poteaux.

Par exemple, le document CN220610872 concerne un tel dispositif de pulvérisation pour blanchir les troncs d'arbres avant l'hiver, afin de prévenir les parasites et les maladies. Ce dispositif comprend un premier et un second manchon en forme d'arc, équipés de buses. Ces deux manchons sont rotatifs et coulissant en hauteur, permettant l'application du liquide de blanchissement sur l'entièreté des troncs d'arbres.

Malheureusement, bien que ce dispositif de pulvérisation peut présenter certains avantages spécifiquement pour l'application de peinture, il s'avère ne pas être adapté pour l'application d'un bandeau de colle sur un tronc ou un poteau. En effet, l'invention décrite dans le document CN220610872 permet d'appliquer le liquide de blanchissement sur toute la hauteur du tronc grâce à un dispositif encombrant et volumineux, nécessitant de nombreuses manipulations pour réaliser l'application. De plus, les premier et second manchons en forme d'arc sont difficilement adaptables à plusieurs diamètres de troncs d'arbre ou de poteaux, limitant l'utilisation du dispositif de pulvérisation de CN220610872 à une gamme restreinte de diamètre de troncs ou de poteaux.

Bien que la divulgation du document CN220610872 puisse présenter certains avantages, ce type de dispositif mériterait d'être grandement amélioré afin de pouvoir appliquer un bandeau de colle sur la surface d'un tronc d'arbre ou d'un poteau, de manière aisée, rapide, uniforme afin d'éviter les étapes de reprise, de préférence en une seule application, afin de faciliter le travail d'encollage d'un opérateur, et ce en considérant la multitude de formes, diamètres ou autres irrégularités des troncs d'arbres ou poteaux.

Il existe donc un réel besoin de fournir un système d'application de colle sur une surface sensiblement circulaire d'un tronc d'arbre ou d'un poteau afin de former une barrière physique pour empêcher les insectes rampants d'attaquer les parties supérieures de l'arbre et de la culture, qui, d'une part, permet d'obtenir un bandeau de colle continu, uniforme et sans manquements, qui recouvre entièrement la surface (circonférence) du tronc ou du poteau sur une largeur prédéterminée, et d'autre part qui s'adapte à différents diamètres de troncs ou de poteaux. De plus, il existe également un réel besoin de fournir un système d'application de colle qui offre une alternative écologique aux pesticides et qui présente une simplicité d'application pour les opérateurs à la fois de manière aisée, rapide et en diminuant le nombre d'opérations nécessaires pour l'application, tout en garantissant une qualité d'encollage constante et en limitant le gaspillage.

Un objectif de la présente invention est de surmonter les défis et préjugés de l'état de la technique.

Un autre objectif de l'invention est de fournir un système d'application de colle sur une surface sensiblement circulaire d'un tronc d'arbre ou d'un poteau adapté à la viscosité d'une colle permettant d'obtenir un bandeau de colle continu, uniforme et sans manquements, recouvrant entièrement la circonférence du tronc ou du poteau sur une largeur donnée et repoussant ou piégeant efficacement les insectes rampants.

Encore un autre objectif de l'invention est d'apporter un système d'application de colle adaptable à différents diamètres/circonférences de troncs ou de poteaux.

En particulier, un objectif de l'invention est d'offrir une alternative écologique aux pesticides ou autres moyens d'extermination chimique des insectes à grande échelle.

Un autre objectif de l'invention est de pouvoir offrir aux opérateurs un système d'application de la colle sur des troncs d'arbre ou poteaux, qui soit aisé, rapide, facilité, optimisé afin de diminuer grandement le nombre d'opérations nécessaires à l'application et le temps d'encollage par arbre, évitant ainsi aux opérateurs des sessions d'encollage coûteuses en temps, ingrates et difficiles.

Encore un autre objectif de l'invention est de fournir un système d'application de colle présentant une qualité d'encollage constante, tout en évitant le gaspillage, retouches ou autres opérations de rattrapage.

La présente invention a ainsi pour but de pallier les inconvénients de l'état de la technique en procurant un système d'application de colle sur une surface sensiblement circulaire d'un tronc d'arbre ou d'un poteau comprenant :
- Au moins un applicateur de colle comprenant un bras gauche et un bras droit, chacun s'étendant dans une direction horizontale et comprenant au moins un rail de guidage s'étendant horizontalement et présentant respectivement une surface sensiblement verticale se faisant face l'une à l'autre, les bras gauche et droit étant reliés l'un à l'autre à leur extrémité proximale par un moyen de liaison et étant agencés pour former un espace de réception d'un tronc d'arbre ou d'un poteau, chacune des extrémité distales des bras gauche et droit comprenant au moins une tête rotative d'application d'une colle,
- Au moins un réservoir de colle comprenant au moins une colle et relié en communication fluidique, directement ou indirectement, à l'au moins une tête rotative d'application d'une colle des bras gauche et droit.

Comme on peut le constater le système d'application de colle selon la présente invention comprend au moins un applicateur de colle lequel comprend un bras gauche et un bras droit, qui s'étendent horizontalement. Ces bras gauche et droit sont reliés l'un à l'autre au niveau de leurs extrémités proximales par un moyen de liaison de manière à être sensiblement parallèles l'un à l'autre, et de préférence s'éloignent l'un de l'autre au niveau de leur extrémité distale. Un espace de réception d'un tronc d'arbre ou d'un poteau est formé par les deux bras de l'au moins un applicateur de colle du système d'application de colle selon l'invention.

Dans un mode de réalisation préféré de la présente invention, les bras gauche et droit de l'au moins un applicateur de colle s'éloignent l'un de l'autre à leur extrémité distale.

En outre, chaque bras comprend un rail de guidage avec une surface sensiblement verticale, lesquelles se font face l'une à l'autre, ce qui permet de manière particulièrement avantageuse à l'utilisateur de faire glisser respectivement les rails de guidage du bras gauche et du bras droit de l'au moins un applicateur de colle selon l'invention, autour de la circonférence d'un tronc d'arbre ou d'un poteau afin que ce/ces dernier(s) puissent venir se loger dans l'espace de réception prévu à cet effet.

De plus, chaque bras présente également, au niveau de son extrémité distale, au moins une tête rotative d'application d'une colle.

Dans un mode de réalisation préféré de la présente invention, l'au moins une tête rotative d'application de colle comprend, en outre, au moins une buse de pulvérisation de colle, un moyen de pivot, au moins un moyen de rotation du moyen de pivot, au moins un ressort de retour, et au moins une tuyauterie d'amenée de la colle à la tête rotative d'application.

Dans encore un mode de réalisation préféré de la présente invention, l'au moins un moyen de rotation du moyen de pivot est choisi dans le groupe comprenant au moins un élément palpeur qui s'étend de manière sensiblement horizontale en direction de l'espace de réception et agencé pour entraîner en rotation le moyen de pivot, au moins un actionneur mécanique, tel qu'un moteur ou un vérin associé à un bras oscillant, piloté par un capteur électrique détectant la position de l'applicateur de colle par rapport à l'arbre ou le poteau, et leurs combinaisons.

Plus particulièrement, l'au moins un élément palpeur s'étend horizontalement vers l'espace de réception et permet d'entrainer en rotation le moyen de pivot de la tête rotative d'application de colle. En pratique, tel qu'expliqué ci-avant, lorsque l'opérateur, le manipulateur du système d'application de colle selon la présente invention souhaite réaliser une application sur un tronc d'arbre ou un poteau, lorsque l'applicateur est glissé autour de la circonférence d'un tronc d'arbre ou d'un poteau afin que ce/ces dernier(s) puissent venir se loger dans l'espace de réception prévu à cet effet, les éléments palpeurs respectivement du bras gauche et du bras droit s'étendant vers l'espace de réception vont entrer en contact avec le tronc d'arbre ou le poteau, ce qui va les entraîner en rotation et par conséquent entraîner en rotation la/les têtes rotative d'application de colle.

De manière alternative et équivalente, l'au moins un moyen de rotation du moyen de pivot peut être l'au moins un actionneur mécanique, ce dernier peut être par exemple un moteur ou un vérin associé à un bras oscillant, permettant d'entrainer en rotation le moyen de pivot de la tête rotative d'application de colle. En pratique, lorsque l'opérateur, le manipulateur du système d'application de colle selon la présente invention souhaite réaliser une application sur un tronc d'arbre ou un poteau, lorsque l'applicateur est glissé autour de la circonférence d'un tronc d'arbre ou d'un poteau afin que ce/ces dernier(s) puissent venir se loger dans l'espace de réception prévu à cet effet, la position de l'applicateur de colle par rapport au tronc d'arbre ou au poteau est détectée par un capteur électrique pilotant l'au moins un actionneur mécanique, ce dernier entrainant en rotation la/les têtes rotative d'application de colle.

La colle est logée dans au moins un réservoir de colle relié en communication fluidique, directement ou indirectement, à l'au moins une tuyauterie d'amenée de la colle de la tête rotative d'application des bras gauche et droit de l'invention. Cela permettant en outre de disposer d'un réservoir de colle comprenant la colle, directement fixé à l'applicateur de colle et/ou distant de celui-ci.

De manière particulièrement avantageuse, le système d'application de colle sur une surface sensiblement circulaire d'un tronc d'arbre ou d'un poteau selon la présente invention permet, en particulier grâce aux deux têtes rotatives d'application d'une colle présentes au niveau des extrémité distale des bras gauche et droit, de surmonter les inconvénients de l'état de la technique en procurant un système d'application de colle qui, d'une part permet d'obtenir un bandeau de colle continu, uniforme et sans manquements/trous nécessitant des étapes additionnelles de reprises ou réparation, qui recouvre entièrement la circonférence d'une surface du tronc ou du poteau sur une largeur donnée, et d'autre part offre une alternative écologique aux pesticides, tout en présentant une simplicité, rapidité et aisance d'application pour les opérateurs, en apportant une qualité d'encollage constante et en limitant le gaspillage.

En effet, en fonctionnement et tel que précédemment expliqué, le système d'application de colle permet à un utilisateur/opérateur/manipulateur, de placer les extrémités distales des bras gauche et droit de l'applicateur de colle vers un tronc d'arbre ou un poteau. Plus précisément, les bras gauche et droit qui, respectivement à leur extrémité distale s'éloignent l'un de l'autre, permet de créer une ouverture de réception du tronc d'arbre ou poteau.

En outre, l'opérateur peut ensuite effectuer un premier mouvement sensiblement horizontal linéaire de l'applicateur de colle, afin de faire glisser les rails de guidage des bras autour de la circonférence d'un tronc d'arbre ou d'un poteau. Ainsi, le tronc d'arbre ou le poteau est correctement logé dans l'espace de réception prévu à cet effet.

Lors de cette opération de glissement de l'applicateur de colle autour de la circonférence de l'arbre ou du poteau, les éléments palpeurs, mobiles en rotation, respectivement du bras gauche et du bras droit s'étendant vers l'espace de réception vont entrer en contact avec le tronc d'arbre ou le poteau, ce qui va les entraîner en rotation et par conséquent entraîner en rotation la/les têtes rotative d'application de colle. Le pivotement, la rotation des éléments palpeurs entraîne, par connexion directe des éléments entre eux, la rotation du moyen de pivot et de la buse de pulvérisation de colle de telle manière que l'orientation des buses de pulvérisation de colle, de chacun des deux bras, est toujours dirigée vers l'élément à traiter situé dans l'espace de réception. Cela permet que la colle, pulvérisée au moyen des buses, est appliqué de façon continue, uniforme et sans manquements, en recouvrant entièrement la surface de la circonférence du tronc ou du poteau sur une largeur prédéterminée.

De manière avantageuse, lorsque le manipulateur fait face à l'arbre et tenant devant lui l'applicateur de colle du le système d'application selon l'invention en position d'utilisation, c'est-à-dire lorsqu'un tronc d'arbre ou poteau est logé dans l'espace de réception prévu à cet effet, les buses des têtes rotatives d'application sont orientées vers l'arrière du tronc d'arbre, regardant dans une direction sensiblement vers le manipulateur, et l'étape d'application de colle est initiée lors du retrait de l'applicateur de colle, avec rotation des têtes rotatives d'application au moyen d'au moins un ressort de retour.

Il est bien évidemment possible et envisagé de réaliser l'application de colle lors de l'amenée de l'applicateur de colle autour de l'arbre ou du poteau à traiter, dans ce dernier cas, les buses des têtes rotatives d'application sont orientées vers l'avant du tronc d'arbre, regardant sensiblement dans la même direction que le manipulateur vers l'avant, et l'étape d'application de colle est alors réalisée le long de l'introduction du tronc d'arbre dans l'espace de réception prévu à cet effet, jusqu'à ce que la circonférence du tronc soit traitée et l'applicateur de colle retiré.

La colle est amenée depuis l'au moins un réservoir de colle qui est relié en communication fluidique, directement ou indirectement, aux buses de pulvérisation des têtes rotatives d'application, au moyen de la tuyauterie d'amenée.

Plus précisément, avant que le tronc ou le poteau soit logé dans l'espace de réception, par exemple positionné au niveau des extrémités distales des bras gauche et droit, les buses de pulvérisation de colle sont orientées vers ces extrémités distales, donc en direction de l'élément à traiter. Lors du premier mouvement sensiblement horizontal linéaire du système, les buses pivotent chacune dans un premier sens de rotation respectif, de telle manière qu'elles sont toujours orientées vers/en regard de l'élément à traiter situé dans l'espace de réception, grâce au contact entre le tronc ou le poteau et les éléments palpeurs, entrainant ces derniers à pivoter.

Lorsque l'élément à traiter, le tronc d'arbre, le poteau, se trouve au niveau des extrémités proximales des bras gauche et droit, les buses de pulvérisation de colle sont toujours orientées vers l'élément à traiter, et par conséquent orientées vers/en regard des extrémités proximales des bras, vers l'utilisateur.

Un second mouvement sensiblement horizontal linéaire, inverse au premier, permet ensuite de retirer l'applicateur de colle. Durant ce second mouvement, les buses de pulvérisation de colles sont en continu orientées vers le tronc ou le poteau, à nouveau grâce au pivotement des éléments palpeurs suivant le déplacement de l'élément à traiter par rapport au système d'application de colle, entrainant la rotation des moyens de pivots et donc des buses de pulvérisation de colle chacune dans un deuxième sens de rotation respectif, inverse au premier sens de rotation préalablement décrit.

En effet, le ressort de rappel des têtes rotatives d'applications d'une colle permet avantageusement aux éléments palpeurs de suivre le mouvement du tronc ou du poteau dans l'espace de réception, à la fois dans un premier sens de rotation lors de l'amenée de l'applicateur de colle autour de la circonférence de l'élément à traiter, et dans un deuxième sens de rotation lors du retrait de l'applicateur de colle.

Le premier et le second mouvement sensiblement horizontal linéaire de l'applicateur de colle du système selon l'invention, par rapport au tronc d'arbre ou poteau permet donc d'appliquer de la colle, préférentiellement sous forme de bandeau, tout autour du tronc ou du poteau en une seule application, de manière constante et uniforme afin d'éviter la présence de manquement ou de zone non recouverte de colle sur la largeur du bandeau, et ce de manière particulièrement surprenante grâce à l'orientation des buses de pulvérisation par rapport à l'élément à traiter. Ainsi, le système d'application de colle selon la présente invention permet de créer une barrière physique efficace, empêchant efficacement les insectes rampants d'accéder aux parties supérieures de l'arbre ou du poteau.

De manière particulièrement avantageuse, la force de rappel exercée par le ressort de retour permet, lorsque les éléments palpeurs entrent en contact avec un tronc ou un poteau et sont donc entraînés en rotation, pour également entraîner en rotation les têtes rotatives, de maintenir un contact des éléments palpeurs sur l'élément à traiter pendant l'application de la colle, malgré d'éventuelles variations de diamètre, circonférence ou irrégularités de la surface. Cela permet avantageusement une rotation continue des têtes d'application de colle afin de suivre précisément la position du tronc ou du poteau dans l'espace de réception, pour l'application de colle dans le but de former une barrière repoussant ou piégeant efficacement les insectes rampants.

De plus, lors du retrait de l'applicateur de colle, la force de rappel exercée par le ressort de retour permet de maintenir un contact entre des éléments palpeurs sur le tronc ou le poteau pendant l'application de la colle, car les éléments palpeurs pivotent pour retourner en position de repos. Cela permet avantageusement une rotation continue des têtes d'application de colle afin de suivre précisément la position de l'élément à traiter dans l'espace de réception, pour l'application de colle dans le but de former une barrière efficace.

Par les termes « extrémité proximale », il est entendu l'extrémité du bras gauche et du bras droit de l'applicateur de colle qui est la plus proche d'un opérateur utilisant l'applicateur du système d'application de colle selon l'invention.

Par les termes « extrémité distale », il est entendu l'extrémité du bras gauche et du bras droit de l'applicateur de colle qui est la plus éloignée d'un opérateur utilisant l'applicateur du système d'application de colle selon l'invention.

Dans un mode de réalisation, il est également envisagé que les éléments palpeurs selon l'invention soient remplacés par un autre moyen équivalent de mise en rotation des moyens de pivot, tels que par exemple un moyen électronique de détection automatique de la position du tronc d'arbre ou du poteau par rapport à l'applicateur de colle.

De manière particulièrement avantageuse, le système d'application de colle sur une surface sensiblement circulaire d'un tronc d'arbre ou d'un poteau selon l'invention permet de surmonter les défis et préjugés de l'état de la technique, en fournissant un système d'application de colle adapté à une application de colle et qui permet d'obtenir un bandeau de colle continu, uniforme et sans manquements, recouvrant entièrement la surface de la circonférence du tronc ou du poteau sur une largeur prédéterminée afin de repousser ou piéger efficacement les insectes rampants.

De manière également avantageuse, le système d'application de colle selon l'invention apporte une alternative efficace et écologique aux pesticides, en évitant l'utilisation de produits chimiques. Le système d'application de colle permet donc d'appliquer des bandeaux de colle sur les troncs d'arbre ou les poteaux empêchant les insectes rampants d'attaquer la culture, sans devoir recourir à des pesticides.

De manière tout aussi également avantageuse, le système d'application de colle selon l'invention apporte aux manipulateurs, utilisateurs et autre opérateur, un moyen de réaliser une application simplifiée de la colle sur des troncs d'arbre ou poteaux, en leur évitant des sessions d'encollage au pinceau, qui sont coûteuse en temps, ingrates et difficiles. En particulier, le système d'application de colle selon l'invention permet à l'opérateur d'appliquer de la colle, par exemple un bandeau de colle, en réalisant simplement un premier mouvement sensiblement horizontal linéaire de l'applicateur vers l'élément à traiter suivi d'un second mouvement sensiblement horizontal linéaire de retrait de l'applicateur de l'élément à traiter. Cette action est plus aisée, plus rapide et plus facile pour l'opérateur qu'une application au pinceau où l'opérateur doit se baisser et tourner autour du tronc ou du poteau afin d'appliquer la colle, ce qui permet de gagner grandement en régularité, rapidité, efficacité et rendement, tout en évitant les gaspillages indésirables.

De manière tout autant avantageuse, le système d'application de colle selon l'invention présente une qualité d'encollage uniforme et constante, avec des bandeaux de colle continus, uniformes et sans manquements, recouvrant entièrement la surface de la circonférence du tronc ou du poteau sur une largeur prédéterminée, tout en évitant le gaspillage de colle issu d'une application irrégulière. De plus, la pulvérisation de colle permet d'éviter de gaspiller celle-ci par rapport à une application au pinceau dans laquelle l'application serait irrégulière, avec des zones où l'épaisseur du bandeau est plus élevée que nécessaire. Le système d'application de colle selon l'invention permet effectivement de pulvériser la colle de manière régulière et contrôlée sur la surface circulaire/circonférentielle du tronc ou du poteau, assurant une épaisseur suffisante pour que la barrière physique soit efficace, tout en évitant le gaspillage de colle due à une couche plus épaisse que nécessaire.

De préférence, l'au moins un applicateur de colle du système d'application selon la présente invention, comprend au moins un support relié au moyen de liaison des bras gauche et droit.

Avantageusement, l'au moins un applicateur de colle du système d'application selon la présente invention, comprend au moins un moyen de préhension et/ou au moins un moyen de préhension relié à l'au moins un support, de préférence l'au moins un moyen de préhension et/ou le au moins un moyen de préhension relié à l'au moins un support est choisi dans le groupe comprenant une perche, une perche automatisée, un bras et un bras automatisée.

Le moyen de préhension relié au support permet avantageusement de faciliter la manipulation du système d'application de colle. Par exemple, le moyen de préhension peut être supportée par un opérateur ou par un dispositif dirigé par un opérateur.

Par exemple, l'applicateur de colle selon la présente invention peut comprendre une perche comme moyen de préhension, avantageusement relié au support, et/ou de manière additionnelle l'applicateur de colle peut également comprendre un bras de maintien par exemple relié à un élément de structure présent sur l'opérateur ou sur une machine extérieure telle qu'un camion, tracteur etc...

Dans un mode de réalisation préférentiel du système d'application selon la présente invention, le bras gauche est un bras gauche fixe et le bras droit est un bras droit mobile monté sur un pivot du moyen de liaison, ou le bras droit est un bras droit fixe et le bras gauche est un bras gauche mobile monté sur un pivot du moyen de liaison.

L'avantage de la présente invention comprenant un bras fixe et un bras mobile monté sur un pivot du moyen de liaison est, de permettre au bras mobile de pivoter par rapport au bras fixe, augmentant la taille de l'espace de réception, et élargissant de ce fait la gamme de diamètre/circonférence d'un tronc d'arbre ou d'un poteau auquel le système d'application de colle et plus particulièrement l'applicateur de colle peut s'appliquer.

En effet, cette configuration permet au système d'application de colle selon l'invention de s'adapter à une large gamme de diamètre/circonférence de tronc d'arbre ou de poteau sans nécessiter de modifications ou d'ajustements manuels complexes. Le pivot du moyen de liaison permet au bras mobile de suivre automatiquement la courbure de la surface cylindrique lors d'un mouvement sensiblement horizontal linéaire de l'applicateur de colle par rapport au tronc ou au poteau, assurant ainsi une répartition uniforme de la colle sur toute la circonférence, quel que soit son diamètre.

En particulier, lorsqu'un tronc ou un poteau d'un certain diamètre/circonférence est logé dans l'espace de réception par un premier mouvement sensiblement horizontal linéaire, de part un contact de l'élément à traiter avec les bras de la tête d'application, l'extrémité distale du bras mobile va s'écarter de l'extrémité distale du bras fixe en pivotant autour du pivot du moyen de liaison, augmentant l'angle entre le bras fixe et le bras mobile du système, augmentant donc également la taille de l'espace de réception. Plus le diamètre de l'élément à traiter est élevé, plus l'angle entre le bras fixe et le bras mobile sera élevé, le système d'application de colle selon l'invention s'adaptant au diamètre du tronc d'arbre ou du poteau.

De plus, l'ajustement du bras mobile par rapport au bras fixe permet de compenser les éventuelles irrégularités de la surface du tronc d'arbre ou du poteau. Grâce à son montage sur un pivot du moyen de liaison, le bras mobile s'adapte automatiquement à ces irrégularités sans interrompre le mouvement sensiblement horizontal linéaire du système d'application de colle, assurant ainsi une application continue et homogène de la colle sur toute la circonférence, sans risque de blocage ou de perte d'efficacité.

De manière avantageuse, au moins un des bras gauche ou droit de l'applicateur du système d'application selon la présente invention, comprend au moins un élément de butée s'étendant transversalement d'un rail de guidage dans l'espace de réception.

De manière tout aussi avantageuse, au moins un des bras gauche et droit de l'applicateur du système d'application selon la présente invention, de préférence les bras gauche et droit, comprend au moins un ergot de blocage de la tête rotative d'application d'une colle agencée pour bloquer au moins une, de préférence les deux, tête rotative d'application d'une colle en position de repos, de préférence par coopération avec un moyen de butée de l'au moins une tête rotative d'application d'une colle en position de repos.

Le ressort de retour de la tête d'application d'une colle selon l'invention, associé à l'ergot de blocage, coopérant possiblement avec un moyen de butée, exerce une force de rappel sur la tête rotative d'application de colle, assurant que celle-ci se bloque en position de repos lorsqu'aucun tronc ou poteau n'est engagé dans l'espace de réception. Cette force de rappel permet d'orienter les têtes rotatives d'application, et donc les buses de pulvérisation, vers les extrémités distales des bras du système, permettant ainsi que le système d'application de colle selon l'invention est prêt à entamer l'encollage d'un tronc ou d'un poteau dans des conditions optimales.

De préférence, le moyen de liaison des extrémités proximales des bras gauche et droit de l'au moins un applicateur de colle du système d'application selon la présente invention, comprend au moins un moyen de retour à une position de repos.

Ce moyen de retour, tel que par exemple un ressort de retour, des bras gauche et droit du système d'application de colle selon l'invention permet d'assurer que le bras mobile est en position de repos lorsque qu'aucun tronc d'arbre ou poteau n'est engagé dans l'espace de réception. Le moyen de retour apporte une force de retour au bras mobile par rapport au bras fixe, le ramenant ainsi à sa position de repos lorsqu'aucune pression n'est exercée. De plus, cette force de retour permet de maintenir les deux bras de l'applicateur selon l'invention en contact avec l'élément à traiter, ce qui apporte davantage de stabilité lors de l'application du bandeau de colle sur un tronc ou un poteau, améliorant la qualité d'encollage.

De manière également préférentielle, l'au moins une buse de pulvérisation de colle du système d'application selon la présente invention, présente un orifice de sortie de colle compris entre 0.25 mm et 1 mm, de préférence compris entre 0.35 mm et 0.90 mm.

Par exemple, l'orifice de sortie de colle est de 0.25 mm, 0.26 mm, 0.27 mm, 0.28 mm, 0.29 mm, 0.30 mm, 0.31 mm, 0.32 mm, 0.33 mm, 0.34 mm, 0.35 mm, 0.36 mm, 0.37 mm, 0.38 mm, 0.39 mm, 0.40 mm, 0.41 mm, 0.42 mm, 0.43 mm, 0.44 mm, 0.45 mm, 0.46 mm, 0.47 mm, 0.48 mm, 0.49 mm, 0.50 mm, 0.51 mm, 0.52 mm, 0.53 mm, 0.54 mm, 0.55 mm, 0.56 mm, 0.57 mm, 0.58 mm, 0.59 mm, 0.60 mm, 0.61 mm, 0.62 mm, 0.63 mm, 0.64 mm, 0.65 mm, 0.66 mm, 0.67 mm, 0.68 mm, 0.69 mm, 0.70 mm, 0.71 mm, 0.72 mm, 0.73 mm, 0.74 mm, 0.75 mm, 0.76 mm, 0.77 mm, 0.78 mm, 0.79 mm, 0.80 mm, 0.81 mm, 0.82 mm, 0.83 mm, 0.84 mm, 0.85 mm, 0.86 mm, 0.87 mm, 0.88 mm, 0.89 mm, 0.90 mm, 0.91 mm, 0.92 mm, 0.93 mm, 0.94 mm, 0.95 mm, 0.96 mm, 0.97 mm, 0.98 mm, 0.99 mm ou 1.00 mm.

De manière tout aussi préférentielle, l'au moins une tête rotative d'application d'une colle du système d'application selon la présente invention, présente un angle de rotation compris entre 0° et 180° à partir de ladite position de repos, de préférence un angle de rotation compris entre 0° et 170°, de préférence entre 0° et 160°, de préférence entre 0° et 150°, de préférence entre 0° et 140°, de préférence entre 0° et 130°, de préférence entre 0° et 120°, de préférence entre 0° et 110°, de préférence entre 0° et 100°.

Lorsque l'applicateur de colle est en position de repos, lorsque qu'aucun tronc d'arbre ou poteau n'est engagé dans l'espace de réception, l'au moins une tête rotative comprenant la buse de pulvérisation est orientée vers les extrémités distales des bras gauche et droit, correspondant à un angle de rotation de 0°. En fonctionnement, lorsqu'un tronc d'arbre ou poteau est logé dans l'espace de réception, la buse de pulvérisation en position de repos pivote jusqu'à une position d'engagement dans laquelle l'au moins une tête rotative comprenant la buse de pulvérisation est orientée vers les extrémités proximales des bras gauche et droit. La buse de pulvérisation pouvant pivoter d'un angle de rotation de 0° jusqu'à un angle de rotation de 180°.

De manière préférentielle, le système d'application de colle sur une surface sensiblement circulaire d'un arbre ou d'un poteau selon l'invention comprend au moins une pompe de pulvérisation agencée pour réaliser, au moyen de l'au moins une buse de pulvérisation de colle, une application de la colle à une pression comprise entre 100 et 350 bars, de préférence comprise entre 200 et 250 bars.

Avantageusement, le système d'application de colle sur une surface sensiblement circulaire d'un arbre ou d'un poteau selon l'invention comprend au moins un moyen d'activation de l'au moins une pompe de pulvérisation, de préférence l'au moins un moyen d'activation est choisi dans le groupe comprenant un actionneur manuel tel qu'un pistolet pneumatique, une électrovanne et leurs combinaisons.

La présence d'au moins un moyen d'activation de l'application de colle permet d'activer ou de désactiver l'au moins une pompe de pulvérisation. Cela permet d'appliquer préférentiellement la colle lors du second mouvement sensiblement horizontal linéaire de l'applicateur de colle selon l'invention par rapport au tronc ou au poteau, correspondant à l'étape de retrait. Ce mode d'application permet d'éviter d'appliquer une double couche de colle et donc de réduire le gaspillage.

De manière particulièrement surprenante, l'application d'une seule couche de colle, préférentiellement sous forme de bandeau, avec le système d'application de colle selon l'invention est suffisante pour obtenir une barrière physique efficace contre les insectes rampants, assurant ainsi une protection optimale avec une consommation minimale de colle.

D'autres formes de réalisation du système d'application de colle sur une surface sensiblement circulaire d'un arbre ou d'un poteau suivant l'invention sont indiquées dans les revendications annexées.

L'invention a aussi pour objet une colle agencée pour être appliquée par le système d'application de colle sur une surface sensiblement circulaire d'un arbre ou d'un poteau selon l'invention.

La colle selon la présente invention, agencée pour être appliquée par le système d'application de colle sur une surface sensiblement circulaire d'un arbre ou d'un poteau selon l'invention tel qu'indiqué ci-avant comprend au moins une huile végétale choisie dans le groupe comprenant l'huile de tournesol, l'huile de colza, l'huile de carthame, l'huile de ricin, l'huile de soja, l'huile de pépins de raisin, l'huile d'olive et leurs mélanges, comprenant au moins une résine végétale choisie dans le groupe comprenant la colophane, l'ambre, le balsam, le dammar, le copal, l'oliban ou frankincense, le mastic, la sandaraque et leurs mélanges, comprenant au moins une cire naturelle et/ou d'origine végétale choisie dans le groupe comprenant la cire d'abeille, la shellac, la lanoline, la cire de carnauba, la cire de candelilla, la cire de soja, la cire de ricin, la cire de son de riz et leurs mélanges.

Avantageusement, l'huile végétale de la colle selon la présente invention est présente à une teneur comprise entre 50 et 90%.

Préférentiellement, la résine végétale de la colle selon la présente invention est présente à une teneur comprise entre 10 et 40%.

Plus particulièrement, la cire naturelle de la colle selon la présente invention est présente à une teneur comprise entre 1 et 10%.

De manière particulièrement avantageuse, la colle selon la présente invention présente une viscosité dynamique comprise entre 350 et 7500 mPa.s mesurée par un viscosimètre rotationnel IKA Rotavisc Io-vi avec une aiguille SP-3 à une vitesse de rotation de 120 tour par minute à une température de 50°C.

Par exemple, un mode de réalisation de la colle selon la présente invention comprend 70% d'huile végétale telle que de l'huile de ricin, 25% de résine végétale telle que de la colophane et 5% de cire naturelle telle que de la cire d'abeille, et présente une viscosité dynamique de 971 mPa.s mesurée par un viscosimètre rotationnel IKA Rotavisc lo-vi avec une aiguille SP-3 à une vitesse de rotation de 120 tour par minute à une température de 50°C.

D'autres formes de réalisation de la colle agencée pour être appliquée par le système d'application de colle sur une surface sensiblement circulaire d'un arbre ou d'un poteau selon l'invention suivant l'invention sont indiquées dans les revendications annexées.

L'invention a aussi pour objet l'utilisation du système d'application de colle sur une surface sensiblement circulaire d'un arbre ou d'un poteau selon l'invention et de la colle selon l'invention, pour l'application d'un film adhésif sur une surface sensiblement circulaire d'un tronc d'arbre ou d'un poteau.

De manière particulièrement avantageuse, l'utilisation du système d'application de colle sur une surface sensiblement circulaire d'un arbre ou d'un poteau selon l'invention et de la colle selon l'invention permet d'appliquer un bandeau de colle sous forme de film adhésif sur le tronc d'arbre ou le poteau, en une seule application. En effet, en pratique le premier mouvement sensiblement horizontal linéaire suivi du second mouvement sensiblement horizontal linéaire de retrait de l'applicateur de colle selon l'invention par rapport à l'élément à traiter permet d'obtenir un bandeau de colle continu, uniforme et sans manquements, qui recouvre entièrement la surface de la circonférence du tronc ou du poteau sur une largeur prédéterminée.

D'autres caractéristiques, détails et avantages de l'invention ressortiront de la description donnée ci-après, à titre non limitatif et en faisant référence aux dessins.

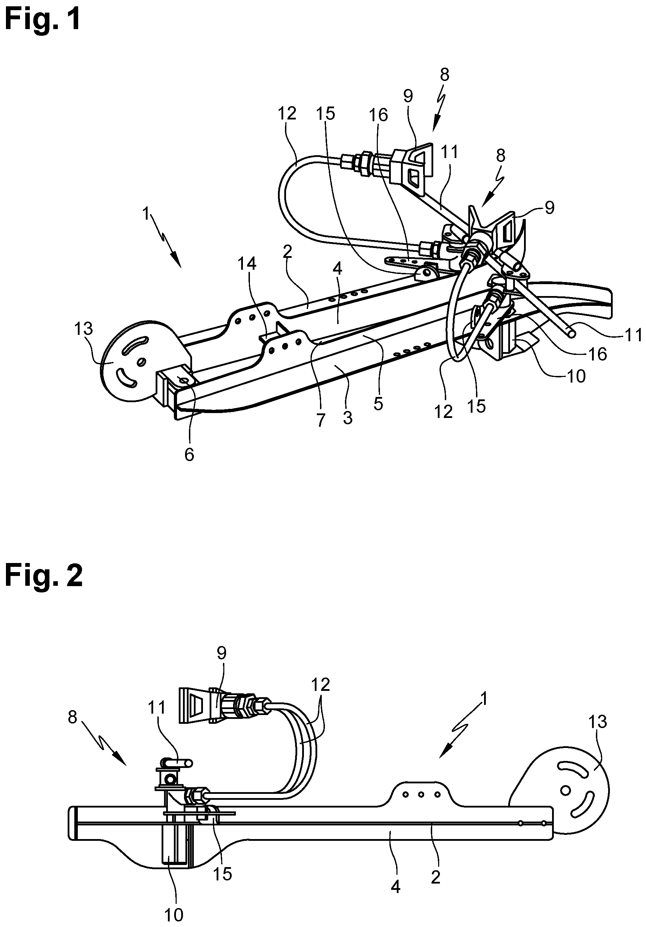

Dans les dessins, la figure 1 est une vue en perspective d'un applicateur de colle selon la présente invention.
La figure 2 est une vue de côté d'un applicateur de colle selon la présente invention.
La figure 3 est une vue en perspective d'un applicateur de colle selon la présente invention coopérant avec un tronc d'arbre ou un poteau de petit diamètre.
La figure 4 est une vue de haut d'un applicateur de colle selon la présente invention coopérant avec un tronc d'arbre ou un poteau de petit diamètre.
La figure 5 est une vue de haut d'un applicateur de colle selon la présente invention coopérant avec un tronc d'arbre ou un poteau de grand diamètre.
La figure 6 est une vue de haut d'un applicateur de colle selon la présente invention coopérant avec un tronc d'arbre ou un poteau de grand diamètre.

Sur les figures, les éléments identiques ou analogues portent les mêmes références.

Le système d'application de colle sur une surface sensiblement circulaire d'un tronc d'arbre ou d'un poteau selon la présente invention comprend un applicateur de colle 1.

Selon les modes de réalisation des figures 1 à 6, l'applicateur de colle 1 selon l'invention comprend un bras gauche 2 et un bras droit 3. Les bras gauche 2 et droit 3 s'étendent horizontalement et présentent chacun une extrémité proximale et une extrémité distale. L'extrémité proximale est l'extrémité du bras gauche 2 et du bras droit 3 de l'applicateur de colle qui est la plus proche de la position d'un opérateur utilisant l'applicateur de colle 1 selon l'invention. L'extrémité distale est l'extrémité du bras gauche 2 et du bras droit 3 de l'applicateur de colle qui est la plus éloignée de la position d'un opérateur utilisant l'applicateur de colle 1 selon l'invention. Chaque bras présente un rail de guidage 4, 5 possédant un surface sensiblement verticale se faisant face l'une à l'autre.

Les bras 2, 3 sont reliés au niveau de leur extrémité proximale par un moyen de liaison 6, et s'éloignent l'un de l'autre au niveau de leur extrémité distale. Le bras gauche 2 est un bras fixe et le bras droit 3 est un bras mobile monté sur un pivot du moyen de liaison 6.

Il est bien entendu que l'inverse est également possible, le bras gauche 2 peut être le bras mobile monté sur un pivot du moyen de liaison 6 et le bras droit 3 est le bras fixe.

Les bras gauche 2 et droit 3 sont agencés pour former un espace de réception 7 d'un tronc d'arbre ou d'un poteau. Le bras gauche 2 comprend un élément de butée 14 s'étendant transversalement du rail de guidage 4 vers l'espace de réception 7. De plus, le moyen de liaison 6 comprend un moyen de retour à une position de repos, permettant au bras mobile d'être en position de repos, tel qu'illustré aux figures 1, 2, 3 et 5, lorsqu'aucun élément à traiter n'est engagé dans l'espace de réception 7, à savoir en position de repos.

L'applicateur de colle 1 comprend également un support 13 relié au moyen de liaison 6. Un moyen de préhension peut être relié audit support 13 afin de faciliter la manipulation du système d'application de colle selon la présente invention. Ce moyen de préhension peut être une perche, une perche automatisée, un bras, un bras automatisée.

Selon les modes de réalisation des figures 1 à 6, chaque bras, respectivement gauche et droit, comprend une tête rotative d'application d'une colle 8 au niveau de son extrémité distale. Les têtes rotatives d'application d'une colle comprennent chacune une buse de pulvérisation de colle 9 présentant un orifice de sortie de colle compris entre 0.45 et 0.60 mm, plus particulièrement compris entre 0.50 et 0.55 mm et reliée à une pompe de pulvérisation au moyen d'une tuyauterie 12 d'amenée de la colle. La pompe de pulvérisation est agencée pour effectuer une application de la colle par les buses de pulvérisation 9 à une pression comprise entre 200 et 250 bars.

Les têtes rotatives d'application d'une colle 8 comprennent chacune également un moyen de pivot 10, un élément palpeur 11, un ressort de retour, une tuyauterie 12 d'amenée de la colle à la tête rotative d'application 8 et un moyen de butée 16. La tuyauterie 12 est relié en communication fluidique, directement ou indirectement à un réservoir de colle dans lequel la colle est initialement logée.

Les éléments palpeurs 11 s'étendent horizontalement vers l'espace de réception 7, tel qu'illustré aux figures 1, 2, 3 et 5, lorsqu'aucun élément à traiter n'est engagé dans l'espace de réception 7. Ils sont agencés pour entrainer en rotation le moyen de pivot 10 de la tête rotative d'application de colle 1 correspondant.

Dans un autre mode de réalisation, il est également envisagé que les éléments palpeurs 11 soient remplacés par un autre moyen équivalent de mise en rotation des moyens de pivot 10, tels que par exemple un moyen électronique de détection automatique de la position du tronc d'arbre ou du poteau par rapport à l'applicateur de colle 1.

Les bras gauche 2 et droit 3 comprennent également chacun un ergot de blocage 15 de la tête rotative d'application d'une colle 8. Cet ergot de blocage 15 est agencé sur chaque bras 2, 3 de manière à coopérer avec le moyen de butée 16 de la tête d'application d'une colle 8 correspondant, pour bloquer ladite tête 8 dans une position de repos.

Les têtes rotatives d'application d'une colle 8 présentent un angle de rotation compris entre 0 et 180°, de préférence compris entre 0 et 100°. Cet ange de rotation est l'angle entre la direction horizontale du bras 2,3 sur lequel est monté la tête rotative d'application d'une colle 8 et la direction de l'orientation de la buse de pulvérisation 9 de la tête rotative d'application d'une colle 8, allant de l'extrémité distale du bras 2, 3 vers l'espace de réception 7.

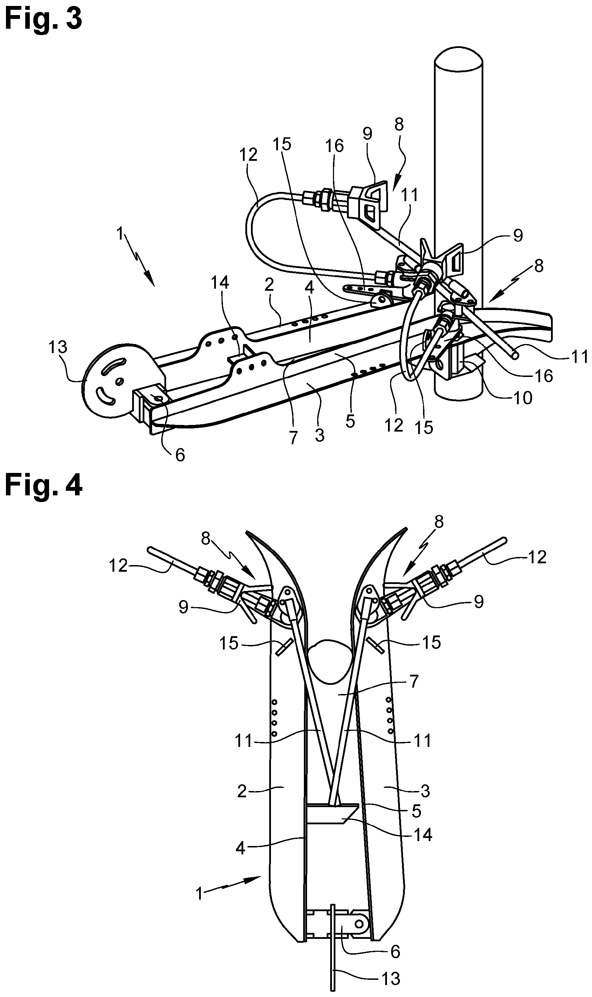

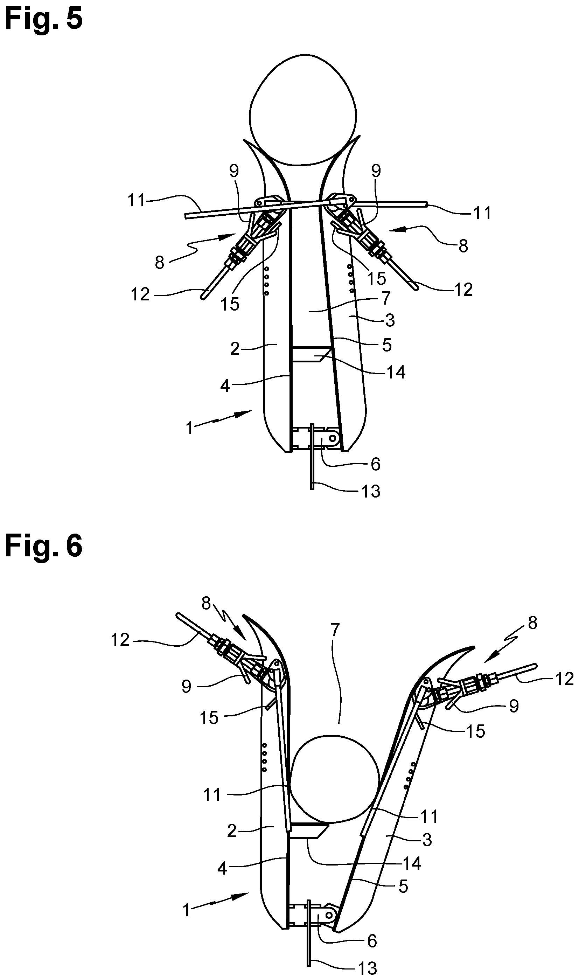

Lorsque l'applicateur de colle 1 est en position de repos tel qu'illustré aux figures 3 et 5, lorsque qu'aucun tronc d'arbre ou poteau n'est engagé dans l'espace de réception 7, l'au moins une tête rotative 8 comprenant la buse de pulvérisation 9 est orientée vers les extrémités distales des bras gauche 2 et droit 3, correspondant à un angle de rotation de 0°. En fonctionnement, lorsqu'un tronc d'arbre ou poteau est logé dans l'espace de réception 7 tel qu'illustré aux figures 4 et 6, la buse de pulvérisation 9 en position de repos pivote jusqu'à une position d'engagement dans laquelle l'au moins une tête rotative 8 comprenant la buse de pulvérisation 9 est orientée vers les extrémités proximales des bras gauche 2 et droit 3. La buse de pulvérisation 9 pouvant pivoter d'un angle de rotation de 0° jusqu'à un angle de rotation de 180°.

En fonctionnement, lors de l'encollage d'un tronc d'arbre ou d'un poteau, l'applicateur de colle 1 est initialement en position de repos, tel qu'illustré aux figures 3 et 5. Dans cette position de repos, aucun tronc d'arbre ou poteau n'est engagé dans l'espace de réception 7, les buses de pulvérisation d'une colle 9 sont orientées vers les extrémités distales des bras 2, 3 de l'applicateur de colle 1, et l'angle de rotation correspond à l'angle de rotation minimal.

En position de repos, les buses de pulvérisation d'une colle 9 sont donc orientées vers les extrémités distales des bras 2, 3 de l'applicateur de colle 1 grâce à l'action des ressorts de retour des têtes d'application d'une colle 8 combiné à la coopération entre les ergots de blocage 15 avec les moyens de butée 16. En effet, Le ressort de retour exerce une force de rappel sur la tête rotative d'application 8, imposant au moyen de butée 16 de rester en contact avec l'ergot de blocage 15, bloquant l'orientation de la tête rotative d'application 8, et donc de la buse de pulvérisation 9, vers les extrémités distales des bras 2, 3.

De plus, aucune pression étant exercée sur le bras mobile en position de repos, celui-ci se trouve en position de repos dû à la force de retour imposée par le moyen de retour compris par le moyen de liaison 6.

Lors d'un premier mouvement sensiblement horizontal linéaire du système d'application de colle par rapport à un tronc d'arbre ou un poteau, le tronc ou poteau étant situé au niveau des extrémités distales des bras gauche 2 et droit 3 est vient se loger dans l'espace de réception 7 en glissant sur les rails 4, 5. Les éléments palpeurs 11 respectivement du bras gauche 2 et du bras droit 3 s'étendant vers l'espace de réception 7 vont entrer en contact avec le tronc d'arbre ou le poteau et être entrainés à pivoter. Le pivotement des éléments palpeurs 11 va lui-même entrainer en rotation le moyen de pivot 10 de la tête rotative d'application d'une colle 8 et les buses de pulvérisation de colle 9 chacune dans un premier sens de rotation respectif. Ainsi, les buses de pulvérisation de colle 9, initialement orientées vers les extrémités distales des bras 2, 3, pivotent également, de par la rotation du moyen de pivot 10, de telle manière qu'elle sont toujours orientées vers l'élément à traiter situé dans l'espace de réception 7, suivant son mouvement.

Lorsque le tronc d'arbre ou le poteau est engagé dans l'espace de réception 7, tel qu'illustré sur les figures 4 et 6, le système d'application de colle est en position d'engagement. Dans cette position, les buses de pulvérisation d'une colle 9 sont orientées vers les extrémités proximales des bras 2, 3 de l'applicateur de colle 1, et l'angle de rotation correspond à l'angle de rotation maximal. Les buses de pulvérisations 9 suivant le mouvement de l'élément à traiter dans l'espace de réception 7 sont également orientées vers ce dernier grâce à l'entrainement des éléments palpeurs par le tronc ou le poteau. Selon le mode de réalisation de la figure 6, le tronc ou poteau est amené jusqu'à l'élément de butée 14.

Une fois le tronc d'arbre ou le poteau en position d'engagement, un second mouvement sensiblement horizontal linéaire de retrait du système par rapport au tronc ou poteau permet de retirer l'applicateur de colle en en empruntant le chemin inverse au premier mouvement.

Durant ce second mouvement, la force de rappel du ressort de rappel des têtes rotatives d'applications d'une colle 8 impose aux éléments palpeurs 11 de suivre le mouvement du tronc ou du poteau dans l'espace de réception 7, maintenant un contact entre les éléments palpeurs 11 sur le tronc ou le poteau, afin de repasser en position de repos. A nouveau, le pivotement des éléments palpeurs 11 impose la rotation du moyen de pivot 10, cette rotation entrainant les buses de pulvérisation 9 à pivoter, chacune dans un deuxième sens de rotation respectif, inverse au premier sens de rotation, de manière telle que leur orientation suit précisément toujours l'élément à traiter dans l'espace de réception 7.

Une fois le tronc ou le poteau extrait de l'espace de réception 7, le pivotement des buses de pulvérisation 9 est bloqué par la coopération entre l'ergot de blocage 15 et le moyen de butée 16. L'orientation des buses 9 bloquées est dirigée vers les extrémités distales des bras 2, 3 en position de repos.

Le système d'application de colle est donc à nouveau en position de repos et est prêt pour appliquer un autre bandeau de colle sous forme de film adhésif sur un autre tronc d'arbre ou poteau.

Durant le premier et le second mouvement sensiblement horizontal linéaire, la colle contenue dans le réservoir de colle est pulvérisée au moyen des buses de pulvérisation 9 sur le tronc d'arbre ou le poteau en déplacement dans l'espace de réception 7, appliquant la colle sur la surface circulaire de l'élément à traiter, de préférence sous forme de bandeau. Le fait que l'orientation des buses de pulvérisation de colle 9 soit toujours dirigée vers l'élément à traiter situé dans l'espace de réception 7 permet que, en une seule application, la colle soit appliquée de façon continue, uniforme et sans manquements, en recouvrant entièrement la surface du tronc ou du poteau sur une largeur prédéterminée. La colle appliquée sur l'élément à traiter obtenue par le système d'application de colle sur une surface sensiblement circulaire d'un tronc d'arbre ou d'un poteau selon la présente invention est donc une barrière physique efficace, empêchant les insectes rampants d'accéder aux parties supérieures de l'arbre ou du poteau.

Les figures 5 et 6 montrent la manière dont le système d'application de colle s'adapte à différentes tailles de troncs d'arbre ou de poteaux grâce à la combinaison du bras gauche 2 fixe avec le bras droit 3 mobile monté sur un pivot du moyen de liaison 6. Le bras droit 2 mobile va pivoter par rapport au bras gauche 2 fixe lorsque l'élément à traiter est engagé dans l'espace de réception 7, augmentant ainsi la taille de l'espace de réception 7 en fonction du diamètre/circonférence du tronc ou du poteau.

En position de repos, le moyen de retour compris par le moyen de liaison 6 assure que le bras droit 3 mobile est en position de repos lorsqu'aucun élément à traiter n'est engagé dans l'espace de réception 7.

Lors du premier mouvement sensiblement horizontal linéaire, le tronc ou le poteau d'un certain diamètre/circonférence est logé dans l'espace de réception 7. Un contact est établi entre les bras 2, 3 de l'applicateur de colle 1 et l'élément à traiter, ce qui pousse l'extrémité distale du bras droit 3 mobile à s'écarter de l'extrémité distale du bras gauche 2 fixe en pivotant autour du pivot du moyen de liaison 6, ajustant l'angle entre les deux bras 2, 3 en fonction du diamètre/circonférence de l'élément. Plus le diamètre/circonférence est grand, plus l'angle entre le bras fixe et le bras mobile augmente, garantissant une adaptation optimale.

Lors du second mouvement sensiblement horizontal linéaire de retrait, le tronc ou poteau est extrait de l'espace de réception 7 et la force de rappel du moyen de retour compris dans le moyen de liaison 6 pousse le bras droit 3 mobile à retourner en position de repos, maintenant son contact avec l'élément à traiter jusqu'à ce que ce-dernier soit extrait de l'espace de réception 7.

Le moyen de retour permet également que les deux bras 2, 3 restent en contact avec la surface du tronc ou du poteau lors de l'application de la colle, offrant ainsi une stabilité accrue et une meilleure qualité d'encollage.

Dans un mode de réalisation particulier, le système d'application de colle comprend un moyen d'activation de la pompe de pulvérisation, le moyen d'activation étant choisi dans le groupe comprenant un actionneur manuel tel qu'un pistolet pneumatique, une électrovanne et leurs combinaisons, permettant d'activer ou désactiver la pompe de pulvérisation.

Dans un mode de réalisation préféré, les buses 9 sont activées lors du second mouvement sensiblement horizontal linéaire de retrait de l'applicateur 1 et désactivées une fois que l'élément à traiter est extrait de l'espace de réception 7. Ce mode de réalisation permet d'éviter d'appliquer une double couche de colle sur le tronc ou le poteau, réduisant le gaspillage étant donné qu'une seule couche de colle, préférentiellement sous forme de bandeau, est suffisante pour obtenir une barrière physique efficace contre les insectes rampants.

De manière plus particulière, la colle selon la présente invention agencée pour être appliquée par le système d'application de colle selon la présente invention comprend au moins une huile végétale choisie dans le groupe comprenant l'huile de tournesol, l'huile de colza, l'huile de carthame, l'huile de ricin, l'huile de soja, l'huile de pépins de raisin, l'huile d'olive et leurs mélanges, comprenant au moins une résine végétale choisie dans le groupe comprenant la colophane, l'ambre, le balsam, le dammar, le copal, l'oliban ou frankincense, le mastic, la sandaraque et leurs mélanges, comprenant au moins une cire naturelle et/ou d'origine végétale choisie dans le groupe comprenant la cire d'abeille, la shellac, la lanoline, la cire de carnauba, la cire de candelilla, la cire de soja, la cire de ricin, la cire de son de riz et leurs mélanges.

Avantageusement, l'huile végétale de la colle selon la présente invention est présente à une teneur comprise entre 50 et 90%.

Préférentiellement, la résine végétale de la colle selon la présente invention est présente à une teneur comprise entre 10 et 40%.

Plus particulièrement, la cire naturelle de la colle selon la présente invention est présente à une teneur comprise entre 1 et 10%.

De manière particulièrement avantageuse, la colle selon la présente invention présente une viscosité dynamique comprise entre 350 et 7500 mPa.s mesurée par un viscosimètre rotationnel IKA Rotavisc Io-vi avec une aiguille SP-3 à une vitesse de rotation de 120 tour par minute à une température de 50°C.

Par exemple, un mode de réalisation de la colle selon la présente invention comprend 70% d'huile végétale telle que de l'huile de ricin, 25% de résine végétale telle que de la colophane et 5% de cire naturelle telle que de la cire d'abeille, et présente une viscosité dynamique de 971 mPa.s mesurée par un viscosimètre rotationnel IKA Rotavisc lo-vi avec une aiguille SP-3 à une vitesse de rotation de 120 tour par minute à une température de 50°C.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Système d'application de colle sur une surface sensiblement circulaire d'un tronc d'arbre ou d'un poteau comprenant :
- Au moins un applicateur de colle (1) comprenant un bras gauche (2) et un bras droit (3), chacun s'étendant dans une direction horizontale et comprenant au moins un rail de guidage (4, 5) s'étendant horizontalement et présentant respectivement une surface sensiblement verticale se faisant face l'une à l'autre, lesdits bras gauche (2) et droit (3) étant reliés l'un à l'autre à leur extrémité proximale par un moyen de liaison (6) et étant agencés pour former un espace de réception (7) d'un tronc d'arbre ou d'un poteau, chacune des extrémité distales des bras gauche (2) et droit (3) comprenant au moins une tête rotative d'application d'une colle (8), de préférence lesdits bras gauche (2) et droit (3) de l'au moins un applicateur de colle (1) s'éloignent l'un de l'autre à leur extrémité distale,
- Au moins un réservoir de colle comprenant au moins une colle et relié en communication fluidique, directement ou indirectement, à ladite au moins une tête rotative d'application d'une colle (8) desdits bras gauche (2) et droit (3).

2. Système d'application de colle sur une surface sensiblement circulaire d'un arbre ou d'un poteau selon la revendication 1, dans lequel ladite au moins une tête rotative d'application de colle (8) comprend au moins une buse de pulvérisation de colle (9), un moyen de pivot (10), au moins un moyen de rotation dudit moyen de pivot, au moins un ressort de retour, et au moins une tuyauterie (12) d'amenée de la colle à ladite tête rotative d'application de colle (8).

3. Système d'application de colle sur une surface sensiblement circulaire d'un arbre ou d'un poteau selon la revendication 2, dans lequel ledit au moins un moyen de rotation dudit moyen de pivot est choisi dans le groupe comprenant au moins un élément palpeur (11) qui s'étend de manière sensiblement horizontale en direction de l'espace de réception (7) et agencé pour entraîner en rotation ledit moyen de pivot (10), au moins un actionneur mécanique, tel qu'un moteur ou un vérin associé à un bras oscillant, piloté par un capteur électrique détectant la position de l'applicateur de colle par rapport à l'arbre ou le poteau, et leurs combinaisons.

4. Système d'application de colle sur une surface sensiblement circulaire d'un arbre ou d'un poteau selon l'une quelconque des revendications précédentes, dans lequel ledit au moins un applicateur de colle (1) comprend au moins un support (13) relié audit moyen de liaison (6) desdits bras gauche (2) et droit (3).

5. Système d'application de colle sur une surface sensiblement circulaire d'un arbre ou d'un poteau selon l'une quelconque des revendications précédentes, dans lequel ledit au moins un applicateur de colle (1) comprend au moins un moyen de préhension et/ou au moins un moyen de préhension relié audit au moins un support (13), de préférence ledit au moins un moyen de préhension et/ou ledit au moins un moyen de préhension relié audit au moins un support (13) est choisi dans le groupe comprenant une perche, une perche automatisée, un bras et un bras automatisée.

6. Système d'application de colle sur une surface sensiblement circulaire d'un arbre ou d'un poteau selon l'une quelconque des revendications précédentes, dans lequel ledit bras gauche (2) est un bras gauche fixe et ledit bras droit (3) est un bras droit mobile monté sur un pivot du moyen de liaison (6), ou dans lequel ledit bras droit (3) est un bras droit fixe et ledit bras gauche (2) est un bras gauche mobile monté sur un pivot du moyen de liaison (6).

7. Système d'application de colle sur une surface sensiblement circulaire d'un arbre ou d'un poteau selon l'une quelconque des revendications précédentes, dans lequel au moins un desdits bras gauche et droit, de préférence lesdits bras gauche (2) et droit (3), comprend au moins un ergot de blocage (15) de ladite tête rotative d'application d'une colle (8) agencée pour bloquer au moins une, de préférence les deux, tête rotative d'application d'une colle (8) en position de repos, de préférence par coopération avec un moyen de butée (16) de ladite au moins une tête rotative d'application d'une colle (8) en position de repos.

8. Système d'application de colle sur une surface sensiblement circulaire d'un arbre ou d'un poteau selon l'une quelconque des revendications précédentes, dans lequel ledit moyen de liaison (6) desdites extrémités proximales desdits bras gauche (2) et droit (3) de l'au moins un applicateur de colle (1) comprend au moins un moyen de retour à une position de repos.

9. Système d'application de colle sur une surface sensiblement circulaire d'un arbre ou d'un poteau selon l'une quelconque des revendications précédentes, dans lequel ladite au moins une buse de pulvérisation de colle (9) présente un orifice de sortie de colle compris entre 0.25 mm et 1 mm, de préférence compris entre 0.35 mm et 0.90 mm, et/ou dans lequel ladite au moins une tête rotative d'application d'une colle (8) présente un angle de rotation compris entre 0° et 180° à partir de ladite position de repos, de préférence un angle de rotation compris entre 0° et 170°, de préférence entre 0° et 160°, de préférence entre 0° et 150°, de préférence entre 0° et 140°, de préférence entre 0° et 130°, de préférence entre 0° et 120°, de préférence entre 0° et 110°, de préférence entre 0° et 100°.

10. Système d'application de colle sur une surface sensiblement circulaire d'un arbre ou d'un poteau selon l'une quelconque des revendications précédentes, comprenant au moins une pompe de pulvérisation agencée pour réaliser, au moyen de ladite au moins une buse de pulvérisation de colle (9), une application de ladite colle à une pression comprise entre 100 et 350 bars, de préférence comprise entre 200 et 250 bars.

11. Système d'application de colle sur une surface sensiblement circulaire d'un arbre ou d'un poteau selon la revendication 10, comprenant au moins un moyen d'activation de ladite au moins une pompe de pulvérisation, de préférence ledit au moins un moyen d'activation est choisi dans le groupe comprenant un actionneur manuel tel qu'un pistolet pneumatique, une électrovanne et leurs combinaisons.

12. Colle agencée pour être appliquée par le système d'application de colle sur une surface sensiblement circulaire d'un arbre ou d'un poteau selon l'une quelconque des revendications 1 à 11, comprenant au moins une huile végétale choisie dans le groupe comprenant l'huile de tournesol, l'huile de colza, l'huile de carthame, l'huile de ricin, l'huile de soja, l'huile de pépins de raisin, l'huile d'olive et leurs mélanges, comprenant au moins une résine végétale choisie dans le groupe comprenant la colophane, l'ambre, le balsam, le dammar, le copal, l'oliban ou frankincense, le mastic, la sandaraque et leurs mélanges, comprenant au moins une cire naturelle et/ou d'origine végétale choisie dans le groupe comprenant la cire d'abeille, la shellac, la lanoline, la cire de carnauba, la cire de candelilla, la cire de soja, la cire de ricin, la cire de son de riz et leurs mélanges.

13. Colle selon la revendication 12, dans laquelle ladite au moins une huile végétale est présente à une teneur comprise entre 50 et 90%, ladite résine végétale est présente à une teneur comprise entre 10 et 40%, ladite cire naturelle est présente à une teneur comprise entre 1 et 10%,

14. Colle selon la revendication 12 ou 13, présentant une viscosité dynamique comprise entre 350 et 7500 mPa.s mesurée par un viscosimètre rotationnel IKA Rotavisc lo-vi avec une aiguille SP-3 à une vitesse de rotation de 120 tour par minute à une température de 50°C.

15. Utilisation du système d'application de colle sur une surface sensiblement circulaire d'un arbre ou d'un poteau selon l'une quelconque des revendications 1 à 11 et de la colle selon l'une quelconque des revendications 12 à 14, pour l'application d'un film adhésif sur une surface sensiblement circulaire d'un tronc d'arbre ou d'un poteau.
